Europäisches Patentamt

European Patent Office

Office européen des brevets

(19)

(11) Publication number: 0 234 567
A1

(12) **EUROPEAN PATENT APPLICATION**

(21) Application number: 87102654.8

(22) Date of filing: 25.02.87

(51) Int. Cl.⁴: **B29D 11/00 , B29C 33/00**

(30) Priority: 28.02.86 IT 8410886

(43) Date of publication of application:
02.09.87 Bulletin 87/36

(84) Designated Contracting States:
ES GR

(71) Applicant: VESIL S.p.A.
Zona Industriale
I-33086 Montereale Valcellina Pordenone(IT)

(72) Inventor: Padoan, Giorgio Maria
Via Solari 16
I-20144 - Milano(IT)

(74) Representative: Piovesana, Paolo
Corso del Popolo, 70
I-30172 Venezia-Mestre(IT)

(54) Mould for producing organic lenses by casting.

(57) A mould for the production of organic lenses by casting, consisting substantially of two half-moulds - (1,1') retained in their correct relative position by a band (2,2') constructed of a material compatible with the monomer used, and applied by an adhesive substance to the edge of said half-moulds.

FIG.2

EP 0 234 567 A1

This invention relates to a mould for producing organic lenses by casting.

In producing organic lenses by casting, it is known to pour catalysed thermoplastic or thermosetting monomer into a mould formed from two lenses (half-moulds) kept at a predetermined distance apart, and then subjecting the assembly to a thermal polymerisation cycle.

A known type of mould consists of a pair of half-moulds which are kept forcibly adhering to an annular gasket of T cross-section interposed between the lenses, for a part or the whole of the duration of the polymerisation cycle.

A drawback of this type of mould is that the gasket reduces the diameter of the produced lens to below the diameter of the initial half-moulds, and that any removal of the gasket before the polymerisation cycle is complete is extremely difficult because of the danger of damaging the polymer under formation.

A further drawback is that the gasket has to be specially constructed for each type of lens to be produced, and this represents a serious problem particularly in the case of cylindrical lenses, in which the T gasket must be of variable cross-section.

A further drawback is the large number of rejects resulting from this type of production, because of the volume variation of the monomer during polymerisation and the possible entry of air into the mould between the half-moulds and gasket, particularly in the case of negative lenses.

All these drawbacks have already been obviated by a mould consisting of two half-moulds inserted into a single tubular sheath and kept at the correct distance apart by simple adhesion between their edges and said sheath.

This mould has proved reasonably satisfactory, but could be further improved in terms of the followings aspects:

-the insertion of the two half-moulds into the sheath and their stabilisation in their correct relative position is always a delicate operation, which has to be done with the aid of suitable insertion tools and with sufficient care to prevent misalignment between the two half-moulds;

-the maintaining of the position of the half-moulds in the sheath, which depends only on friction, requires the half-moulds to be inserted into the sheath with a certain force, which very often results in microabrasion of the inner sheath surface, with the formation of microshavings which can result in inclusions in the produced lens;

-no matter what precautions are used, it is practically impossible to operate in a dust-free environment, and the actual system used for assembling the mould means that it is difficult to remove any dust traces before its closure, these always representing an undesirable element and one of the reasons for rejecting the lens obtained;

-for each half-mould diameter, the mould requires a corresponding sheath diameter for its formation, the sheath construction therefore requiring special tools and operations.

An object of the invention is to obviate these drawbacks by providing an organic lens mould which is of simple construction without the need for specially constructed equipment, and enables lenses to be obtained practically without rejects.

This object is attained according to the invention by a mould for the production of organic lenses by casting, characterised by consisting substantially of two half-moulds retained in their correct relative position by a band constructed of a material compatible with the monomer used, and applied by an adhesive substance to the edges of said half-moulds.

Again according to the invention, the two half-moulds can be retained by a strip of self-adhesive material.

Advantageously, at least one aperture for feeding the monomer into the mould can be provided in the band.

A preferred embodiment of the present invention is described in greater detail hereinafter with reference to the accompanying drawings, in which:

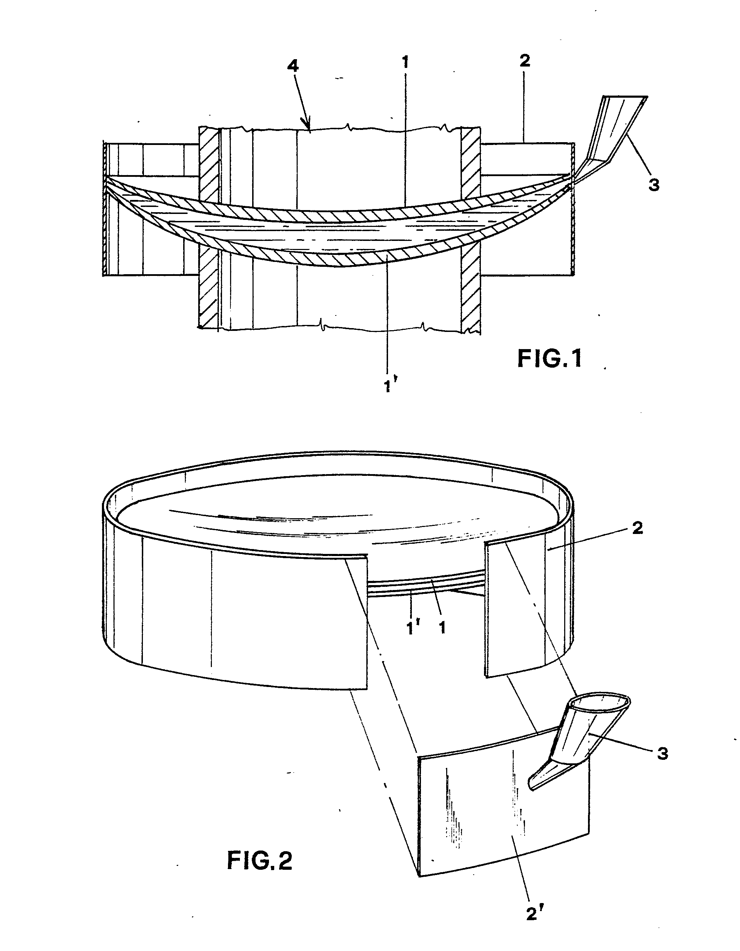

Figure 1 is a vertical diagrammatic section through a mould according to the invention during a stage of its assembly; and

Figure 2 is a partially exploded perspective view thereof.

As can be seen from the figures, the mould according to the invention is formed from two glass lenses 1, 1' forming the two half-moulds retained in their correct relative position by a band 2 of substantially inextensible material applied to the edges of both of them by an adhesive substance. For practical reasons it is preferably for the band 2 to consist of a strip of self-adhesive material, for example a polypropylene strip carrying a layer of acrylic adhesive. This is because a certain superimposing of the ends of the band 2 is then possible to give better mould retention.

To allow the inner mould cavity defined by the two half-moulds 1, 1' and the circumferential band 2 to be filled, it is preferable to apply to said band a feed conduit 3 for the catalysed monomer forming the organic lens.

The conduit 3, which can also advantageously act as an external vessel for compensating the monomer volume variations during the polymerisation cycle, can either be directly applied to the band 2, or be fixed to a part 2' of the band in the form of a preformed element to be applied between the two half-moulds 1, 1' along a portion of their edge which is not covered by the band 2.

In this case a certain internal or external superimposing of the ends of the bands 2 and 2' to give improved retention of the assembly is also possible.

In order to form the mould according to the invention, the two half-moulds 1, 1' are mounted in a conventional positioner 4 which stabilises them in their correct relative position, for example by vacuum. An air jet is then blown into the interspace between the two half-moulds 1, 1' to eliminate any dust traces before application of the self-adhesive strip 2 along the edges of the two facing half-moulds. The length of the self-adhesive strip is slightly less than the circumference of the two half-moulds 1, 1', so that a portion of the edges remains uncovered by said strip 2. A preformed element comprising the piece of strip 2' with the catalysed monomer feed conduit 3 extending from it is then applied to said portion.

Because of the substantial indeformability of the strip 2, even after the assembly formed from the two half-moulds retained by this latter has been removed from the positioner 4 the two half-moulds 1, 1' maintain their correct relative position, and the mould thus obtained can be used for the conventional operations comprising filling with the monomer and the subsequent polymerisation cycle.

When polymerisation is complete, or in any event after the gelling phase has passed, the self-adhesive strip is removed easily from the two-half moulds 1, 1' which are then separated from the obtained organic lens by conventional systems.

From the aforegoing, it is apparent that the mould according to the invention obviates the drawbacks of the known art, and in particular:
-it enables organic lenses to be obtained having a diameter equal to the diameter of the initial half-moulds;
-it prevents any relative movement between the half-moulds and the circumferential bounding element, so excluding the risk of formation of microinclusions, which could lead to rejection of the lens;
-it enables any dust traces between the half-moulds to be removed before application of the perimetral seal;
-it allows ewtremely simple correct relative positioning of the two half-moulds and thus enables reject-free production to be obtained;
-it is of very simple and economical formation, without the need for special equipment and materials.

## Claims

1. A mould for the production of organic lenses by casting, characterised by consisting substantially of two half-moulds (1,1') retained in their correct relative position by a band (2,2') constructed of a material compatible with the monomer used, and applied by an adhesive substance to the edge of said half-moulds.

2. A mould as claimed in claim 1, characterised in that the two half-moulds (1,1') are retained by a strip of self-adhesive material.

3. A mould as claimed in claim 1, characterised in that the band (2,2') is formed in more than one piece.

4. A mould as claimed in claim 1, characterised in that the band (2,2') has its ends superimposed to a certain extent.

5. A mould as claimed in claim 1, characterised in that at least one monomer feed aperture is provided in the band (2,2').

6. A mould as claimed in claim 5, characterised in that a monomer feed conduit (4) is connected to the aperture in the band (2,2').

7. A mould as claimed in claim 6, characterised in that the conduit (4) acts as a compensation vessel for the monomer volume variations during the polymerisation cycle.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 6, no. 17 (M-109)[895], 30th January 1982; & JP-A-56 135 029 (ASAHI GLASS K.K.) 22-10-1981 | 1,2,4 | B 29 D 11/00<br>B 29 C 33/00 |
| Y | Idem<br>--- | 3,5-7 | |
| X | PATENT ABSTRACTS OF JAPAN, vol. 6, no. 58 (M-122)[936], 15th April 1982; & JP-A-57 1721 (ASAHI GLASS K.K.) 06-01-1982<br>--- | 1 | |
| X | FR-A- 973 216 (P.A.M. BEUCHON)<br>* Whole document * | 1 | |
| A | --- | 5,7 | TECHNICAL FIELDS SEARCHED (Int. Cl.4) |
| Y | GB-A-2 021 474 (SOCIETA ITALIANA LENTI S.I.L.)<br>* Page 1, lines 78-117; page 2, lines 1-47; page 4, lines 104-122; page 5, lines 1-89; page 6, lines 90-101; figures 9-17 *<br>--- | 3,5-7 | B 29 D |
| A | US-A-3 211 811 (R.K. LANMAN)<br>* Column 3, lines 9-21; figures 1,2,5,6 *<br>----- | 1,2 | |

The present search report has been drawn up for all claims

| Place of search | Date of completion of the search | Examiner |
|---|---|---|
| THE HAGUE | 09-04-1987 | GOURIER P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82